# EUROPEAN PATENT APPLICATION

(11) **EP 3 825 373 A1**
(43) Date of publication of application: **26.05.2021**
(21) Application number: 20165025.6
(22) Date of filing: 23.03.2020
(51) Int. Cl.: C09J 7/38, C09J 153/00

(54) **PRE-LAID POLYMER WATERPROOF ROLLING MATERIAL**

(30) Priority: 20.11.2019 CN 201911138966
(71) Applicant: Jiangsu Canlon Building Materials Co., Ltd., Suzhou, Jiangsu 215234 (CN)
(72) Inventor: YANG, Li, Suzhou, Jiangsu 215234 (CN); CAI, Jian, Suzhou, Jiangsu 215234 (CN); LI, Zhongren, Suzhou, Jiangsu 215234 (CN)
(74) Representative: de Arpe Fernandez, Manuel

(57) **Abstract**

The present invention relates to a pre-laid polymer waterproof rolling material, which comprises a sheet-like polymer carrier, a hot-melt pressure-sensitive adhesive layer on the sheet-like polymer carrier, and a plurality of anti-sticking particles on the hot-melt pressure-sensitive adhesive layer, wherein the particle size of the anti-sticking particles is smaller than the thickness of the hot-melt pressure-sensitive adhesive layer; the surface of the anti-sticking particles is coated with an organic layer; and the anti-sticking particles are connected with the hot-melt pressure-sensitive adhesive layer by means of the organic layer; the organic layer comprises the following components: 100-160 parts by weight of a solvent; 50-80 parts by weight of a polyurethane resin; 15-20 parts by weight of a pigment; 10-12 parts by weight of a filler; 0.3-1 part by weight of a cross-linking agent; 0.5-1 part by weight of an antioxidant; 1-2.5 parts by weight of an anti-ultraviolet agent; and 0.03-0.2 part by weight of a thickener. The anti-sticking particles will not shed during transportation and will not be trapped into the hot-melt pressure-sensitive adhesive layer, such that the hot-melt pressure-sensitive adhesive layer is exposed to the outside, resulting in a problem of sticking when the pre-laid polymer waterproof rolling material is rolled up or the construction staff step on it.

## Description

### Technical Field

The present invention relates to the field of waterproofing, in particular to a pre-laid polymer waterproof rolling material.

### Background Art

A currently known polymer sheet is used as a carrier, a hot-melt pressure-sensitive adhesive is used as an adhesive layer, and the surface is further covered with a layer of white cement sand as an anti-sticking layer.

Such products have a waterproof function mainly by means of lap jointing by the lapped edges to each other for a connection as a whole; the pre-laid polymer waterproof rolling material has a better waterproof effect than the asphalt-based pre-laid polymer waterproof rolling material.

However, since the white cement sand used in the anti-sticking layer of the pre-laid polymer waterproof rolling material has a particle size larger than the thickness of the hot-melt pressure-sensitive adhesive layer, it cannot be ensured that the particles are completely embedded into the hot-melt pressure-sensitive adhesive layer during the production process, thus sand will be shed during the transportation and use, affecting the actual construction.

However, if the diameter of the white cement sand is made smaller, the particle size of the anti-sticking particles is smaller, the particles can be better combined with the hot-melt pressure-sensitive adhesive layer, and will not shed during the transportation; however, since the particle size of the white cement sand is very small, when the temperature is higher, the particles are further easily trapped into the hot-melt pressure-sensitive adhesive layer and fail to achieve a raised effect; at this point, the hot-melt pressure-sensitive adhesive loses the coverage of the anti-sticking particles and is exposed to the outside, resulting in a problem of sticking when the rolling material is rolled up or the construction staff step on it.

### Summary of the invention

An object of the present invention is to provide a pre-laid polymer waterproof rolling material to solve the above-mentioned problems in the prior art.

In order to achieve the above object of the present invention, the following technical solutions are used:
a pre-laid polymer waterproof rolling material, comprising a sheet-like polymer carrier, a hot-melt pressure-sensitive adhesive layer on the sheet-like polymer carrier, and a plurality of anti-sticking particles on the hot-melt pressure-sensitive adhesive layer; the particle size of the anti-sticking particles is smaller than the thickness of the hot-melt pressure-sensitive adhesive layer; the surface of the anti-sticking particles is coated with an organic layer; and the anti-sticking particles are connected with the hot-melt pressure-sensitive adhesive layer by means of the organic layer;
the organic layer comprises the following components:
   100-160 parts by weight of a solvent;
   50-80 parts by weight of a polyurethane resin;
   15-20 parts by weight of a pigment;
   10-12 parts by weight of a filler;
   0.3-1 part by weight of a cross-linking agent;
   0.5-1 part by weight of an antioxidant;
   1-2.5 parts by weight of an anti-ultraviolet agent; and
   0.03-0.2 part by weight of a thickener.

Further, the sheet-like polymer carrier includes polyethylene, polypropylene, ethylene-olefin copolymer, ethylene-vinyl acetate copolymer, polyvinyl acetate, polyethyl acrylate, polytetrafluoroethylene, polyvinylidene fluoride, polyethylene terephthalate, polyvinyl chloride, polyamide, or a combination of two or more of these materials.

Further, the hot-melt pressure-sensitive adhesive layer includes a butyl rubber-based adhesive, a polyisobutylene-based adhesive, a butyl-based adhesive, an acrylic adhesive, a styrene-isoprene-styrene-based adhesive, a styrene-ethylene-butene-styrene-based adhesive, a styrene-butadiene-styrene-based adhesive, a styrene-butadiene-based adhesive, or a combination of two or more of these materials.

Further, the solvent is an aqueous solvent or an oily solvent.

Further, the aqueous solvent is water; the oily solvent is acetone, butanone or ethyl acetate.

Further, the filler is calcium carbonate, silicon dioxide, magnesium silicate, aluminum hydroxide or aluminum oxide; the pigment is titanium dioxide or zinc oxide; the anti-ultraviolet agent is a composite anti-ultraviolet agent; the cross-linking agent is an isocyanate; the thickener is bentonite; and the antioxidant is a phenolic antioxidant.

Further, the thickness of the sheet-like polymer carrier is 0.3-2 mm, the thickness of the hot-melt pressure-sensitive adhesive layer is 0.1-0.5 mm, and the particle size of the anti-sticking particles is 0.1-0.3 mm.

Further, the anti-sticking particles include quartz sand, cement powder, mica, clay, aluminum hydroxide, aluminum oxide, or a combination of two or more of these materials.

Further, the titanium dioxide is a rutile nano-titanium dioxide.

Further, one side of the surface of the hot-melt pressure-sensitive adhesive layer is exposed, and a peelable release film is adhered to the hot-melt pressure-sensitive adhesive layer that is exposed; an adhesive layer is provided on the other side of the bottom of the sheet-like polymer carrier, a peelable release film is adhered to the adhesive layer, and the adhesive layer is a hot-melt pressure-sensitive adhesive layer.

According to the technical solutions stated above, the present invention has the following beneficial effects:
The particle size of the anti-sticking particles used in this application is smaller than the thickness of the hot-melt pressure-sensitive adhesive layer; the anti-sticking particles can be better combined with the hot-melt pressure-sensitive adhesive layer, and will not shed during the transportation; moreover, by coating the surface of the anti-sticking particles with an organic layer, the particle size of the anti-sticking particles will be prevented from becoming smaller; when the temperature is high or the load is high, the anti-sticking particles are more likely to sink into the hot-melt pressure-sensitive adhesive layer, such that the hot-melt pressure-sensitive adhesive layer lose the coverage of the anti-sticking particles and is exposed to the outside, which may cause a problem of sticking when the pre-laid polymer waterproof rolling material is rolled up or the construction staff step on it.

In the organic layer of the present application, the polyurethane resin can be reacted with concrete to achieve better adhesion; the fillers and pigments can increase the surface roughness of the anti-sticking particles, such that the anti-sticking particles are not easy to sink; at the same time, the fillers and the pigments themselves are exposed to the outside as the inorganic molecules, which also have the anti-sticking effects; the pigments can also prevent ultraviolet rays by means of the mechanism of ultraviolet rays reflection; the anti-ultraviolet agents have anti-ultraviolet effects; the antioxidants have anti-aging effects; the thickener has the effect of thickening to prevent the pigments and fillers in the emulsion from sinking; the crosslinking agent crosslinks the waterborne polyurethane resin molecules and reduces the viscosity of the polyurethane resin when same exists alone.

### Brief Description of the Drawings

In order to illustrate the technical solutions in the particular embodiments of the present invention or in the prior art more clearly, the accompanying drawings to be used in the description of the particular embodiments or the prior art will be briefly introduced below; obviously, the accompanying drawings in the following description show some of the embodiments of the present invention, and those of ordinary skill in the art may still derive other drawings from these accompanying drawings without creative effort.
Figure 1 is a schematic structural diagram of the waterproof rolling material provided in an embodiment of the present invention.
Figure 2 is a schematic diagram of a connection relationship between a pre-laid polymer waterproof rolling material provided in an embodiment of the present invention and an adhesive tape.

Reference numbers in the drawings: 1-sheet-like polymer carrier; 2-hot-melt pressure-sensitive adhesive layer; 3-anti-sticking particles; 4-organic layer; 5-release film; and 6-adhesive layer.

### Detailed Description of Embodiments

The technical solutions in the present invention will be described clearly and completely below with reference to the drawings; obviously, the described embodiments are some of, rather than all of, the embodiments of the present invention. Based on the embodiments of the present invention, all other embodiments obtained by those of ordinary skill in the art without involving any inventive effort fall within the scope of protection of the present invention.

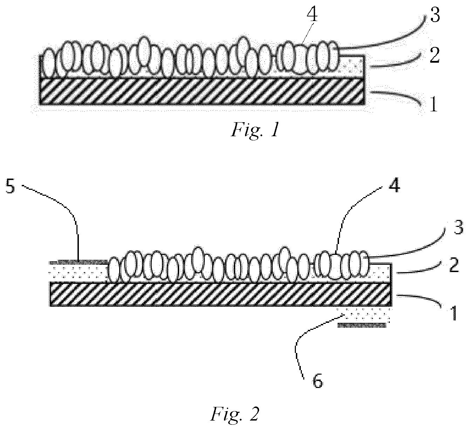

As shown in Figure 1-Figure 2, the pre-laid polymer waterproof rolling material of this application comprises a sheet-like polymer carrier 1, a hot-melt pressure-sensitive adhesive layer 2 on the sheet-like polymer carrier 1, and a plurality of anti-sticking particles 3 on the hot-melt pressure-sensitive adhesive layer 2, wherein the particle size of the anti-sticking particles 3 is smaller than the thickness of the hot-melt pressure-sensitive adhesive layer 2; the surface of the anti-sticking particles 3 is coated with an organic layer 4; and the anti-sticking particles 3 are connected with the hot-melt pressure-sensitive adhesive layer 2 by means of the organic layer 4;
the organic layer 4 comprises the following components:
100-160 parts by weight of a solvent;
50-80 parts by weight of a polyurethane resin;
15-20 parts by weight of a pigment;
10-12 parts by weight of a filler;
0.3-1 part by weight of a cross-linking agent;
0.5-1 part by weight of an antioxidant;
1-2.5 parts by weight of an anti-ultraviolet agent; and
0.03-0.2 part by weight of a thickener.

Specifically, the sheet-like polymer carrier 1 includes polyethylene, polypropylene, ethylene-olefin copolymer, ethylene-vinyl acetate copolymer, polyvinyl acetate, polyethyl acrylate, polytetrafluoroethylene, polyvinylidene fluoride, polyethylene terephthalate, polyvinyl chloride, polyamide, or a combination of two or more of these materials.

Specifically, the hot-melt pressure-sensitive adhesive layer 2 includes a butyl rubber-based adhesive, a polyisobutylene-based adhesive, a butyl-based adhesive, an acrylic adhesive, a styrene-isoprene-styrene-based adhesive, a styrene-ethylene-butene-styrene-based adhesive, a styrene-butadiene-styrene-based adhesive, a styrene-butadiene-based adhesive, or a combination of two or more of these materials.

Specifically, the solvent is an aqueous solvent or an oily solvent.

Specifically, the aqueous solvent is water; the oily solvent is acetone, butanone or ethyl acetate.

Specifically, the filler is calcium carbonate, silicon dioxide, magnesium silicate, aluminum hydroxide or aluminum oxide; the pigment is titanium dioxide or zinc oxide; the anti-ultraviolet agent is a composite anti-ultraviolet agent; the cross-linking agent is an isocyanate; the thickener is bentonite; and the antioxidant is a phenolic antioxidant.

Specifically, the thickness of the sheet-like polymer carrier 1 is 0.3-2 mm, preferably 0.6-1.5 mm, more preferably 0.7-1.2 mm, and most preferably 0.9 mm.

The thickness of the hot-melt pressure-sensitive adhesive layer 2 is 0.1-0.5 mm, preferably 0.2-0.45 mm, and more preferably 0.25-0.40 mm.

The particle size of the anti-sticking particles 3 is 0.1-0.3 mm, preferably 0.15-0.25 mm, and more preferably 0.15-0.2 mm.

Specifically, the anti-sticking particles 3 include quartz sand, cement powder, mica, clay, aluminum hydroxide, aluminum oxide, or a combination of two or more of these materials.

Specifically, the titanium dioxide is a rutile nano-titanium dioxide.

Specifically, one side of the surface of the hot-melt pressure-sensitive adhesive layer 2 is exposed, and a peelable release film 5 is adhered to the hot-melt pressure-sensitive adhesive layer 2 that is exposed; an adhesive layer 6 is provided on the other side of the bottom of the sheet-like polymer carrier 1, a peelable release film 5 is adhered to the adhesive layer 6, and the adhesive layer 6 is a hot-melt pressure-sensitive adhesive layer.

When the hot-melt pressure-sensitive adhesive layer 2 and the adhesive layer 6 are overlapped on the short edges of a plurality of the pre-laid polymer waterproof rolling materials, the release film 5 can be directly peeled off, and they are bonded by the hot-melt pressure-sensitive adhesive layer 2 and the adhesive layer 6. The release film 5 has the function of isolating the hot-melt pressure-sensitive adhesive layer 2 and the adhesive layer 6 that are exposed from tackiness when the pre-laid polymer waterproof rolling materials are transported.

The pre-laid polymer waterproof rolling materials of the present invention includes the following two processing methods:
a method for processing the pre-laid polymer waterproof rolling material of the present invention includes the following steps:
the hot-melt pressure-sensitive adhesive is coated on the sheet-like polymer carrier 1 to form a hot-melt pressure-sensitive adhesive layer 2.

The coating temperature of the hot-melt pressure-sensitive adhesive is 150-180°C, and the coating method includes die-groove extrusion, choice of doctor blade coating or roller coating.

An emulsion is prepared according to the above ratio, alumina is selected as the anti-sticking particles 3, and the prepared emulsion is added to the alumina particles having a particle size of 0.15-0.21 mm, and stirred to uniformly coat the emulsion on the surface of the alumina particles.

The treated alumina particles are evenly coated on the hot-melt pressure-sensitive adhesive layer 2 at 60-70°C.

They are dried in an oven at 50-60°C to evaporate the water in the emulsion.

Another method for processing the pre-laid polymer waterproof rolling material of the present invention includes the following steps:
the hot-melt pressure-sensitive adhesive is coated on the sheet-like polymer carrier 1 to form a hot-melt pressure-sensitive adhesive layer 2.

The coating temperature of the hot-melt pressure-sensitive adhesive is 150-180°C, and the coating method includes die-groove extrusion, doctor blade coating or roller coating.

An emulsion is prepared according to the above ratio, alumina is selected as the anti-sticking particles 3, and the prepared emulsion is added to the alumina particles having a particle size of 0.15-0.21 mm, and stirred to uniformly coat the emulsion on the surface of the alumina particles.

The treated alumina is coated on a release paper, and then transferred to the hot-melt pressure-sensitive adhesive layer 2.

They are dried in an oven at 50-60°C to evaporate the water in the emulsion.

The preferred ratios of the components of the hot-melt pressure-sensitive adhesive layer 2 in this application after being dried off water are shown in Table 1:

**Table 1 Formulation of hot-melt pressure-sensitive adhesive**

| Raw materials | Ratio/% |
|---|---|
| Naphthenic oil 4010 | 20 |
| Zhongkexinyuan PZX-H1100 Resin | 47 |
| KRATON Rubber 1163 | 32 |
| Antioxidant 1010 | 0.5 |
| Anti-ultraviolet agent 770 | 0.5 |

The preparation method of the hot-melt pressure-sensitive adhesive layer 2 of the present application includes:
heating the naphthenic oil to 140°C, adding the Zhongke Xinyuan PZX-H1100 resin, start the stirring and vacuuming same, with a stirring speed of 200 rpm, after the resin melts, adding the rubber and additives, and keep stirring and vacuuming, stirring same at 180°C for 3h, and then performing coating. In such a case, the Zhongke Xinyuan PZX-H1100 resin and KRATON Rubber 1163 belong to the styrene-butadiene-styrene system in the styrene-butadiene-styrene-based adhesive, and the others belong to the fixed components in the adhesive.

The preferred ratios of the components in the organic layer 4 in the present application are shown in Table 2.

**Table 2 Proportion of components in the organic layer**

| Raw materials | Ratio/% |
|---|---|
| Polyurethane resin | 69 |
| Titanium dioxide R-930 | 16 |
| Calcium carbonate cc60 | 12 |
| Antioxidant 1010 | 0.5 |
| Anti-ultraviolet agent 770 | 1.9 |
| Crosslinking agent X-404 | 0.5 |
| Bentonite | 0.1 |

The preparation method of the organic layer 4 of the present application includes: stirring a solution consisting of a solvent and a polyurethane resin at 2000 rpm, adding titanium dioxide R-930 and calcium carbonate CC60, then adding antioxidant 1010 and anti-ultraviolet agent 770 after 30 minutes, and then cross-linking agent X-404 and bentonite after 15 minutes, continuing stirring for 30 minutes followed by material discharging. In such a case, titanium dioxide R-930 is a pigment, calcium carbonate CC60 is a filler, and bentonite is a thickener.

In the present invention application, the anti-sticking particles 3 are preferably alumina particles, and the particle size of the alumina particles is preferably 0.15-0.21 mm; in the present application, 0.15-mm and 0.21-mm alumina are used, respectively; the peel strength of the concrete under standard curing conditions is shown in Table 3:

**Table 3 Peel strength of concrete**

| Particle size of alumina/mm | Peel strength of concrete/MPa |
|---|---|
| 0.15 | 3.2 |
| 0.21 | 2.5 |

It can be seen from Table 3 that the particle size of the alumina particles in the present application is in the range of 0.15-0.21 mm, and the peeling strength of the concrete exceeds 1.5 MPa of the industrial standard.

The relationship between the thickness of the hot-melt pressure-sensitive adhesive layer 2 and the peeling strength of concrete is shown in Table 4:

**Table 4 Relationship between the thickness of hot-melt pressure-sensitive adhesive layer and the peeling strength of concrete**

| Thickness of the hot-melt pressure-sensitive adhesive layer/mm | Peel strength of concrete/MPa |
|---|---|
| 0.20 | 1.7 |
| 0.25 | 2.3 |
| 030 | 2.8 |
| 0.35 | 3.2 |
| 0.4 | 3.5 |

It can be seen from Table 4 that the thickness of the hot-melt pressure-sensitive adhesive layer 2 is preferably in the range of 0.2-0.4 mm, and the peeling strength of the concrete exceeds 1.5 MPa of the industrial standard.

The relationship between the anti-sticking particles 3 of different materials with a thickness of 0.15mm and the peel strength of concrete is shown in Table 5:

**Table 5 Relationship between anti-sticking particles of different materials and the peel strength of concrete**

| Anti-sticking particles | Peel strength of concrete/MPa |
|---|---|
| Quartz sand | 1.9 |
| Mica | 2.1 |
| Calcium carbonate | 2.3 |
| Alumina | 3.2 |

It can be seen from Table 5 that the anti-sticking particles 3 of different materials with a thickness of 0.15mm are as shown, and the peeling strength of the concrete exceeds 1.5 MPa of the industrial standard.

For different ratios of emulsion and alumina amounts, the peeling strength test at the limit condition treatment are shown in Table 6:

**Table 6 Peeling strength test at the limit condition treatment**

| Ratios | 1 : 10 | 1 : 20 | 1 : 30 | 1 : 40 |
|---|---|---|---|---|
| Peel strength of conventional concrete/MPa | 2.9 | 3.1 | 3.3 | 3.3 |
| Peel strength of heat-treated concrete/MPa | 2.6 | 2.7 | 2.7 | 2.7 |
| Peel strength of soaked concrete/MPa | 2.6 | 2.3 | 2.1 | 2.0 |
| Peel strength of UV treated concrete/MPa | 2.5 | 2.9 | 3.1 | 3.1 |
| Peeling strength of concrete in water/MPa | 2.4 | 2.1 | 1.9 | 1.8 |

From Table 6, it can be concluded that the emulsion and alumina at the above ratios can ensure that the strength exceeds 1.5 MPa of the industry standard.

The concrete formulations include water, ordinary Portland cement and ISO standard sand, with water: ordinary Portland cement: ISO standard sand = 0.4 : 1 : 2.

The peeling strength of the conventional concrete means that the curing conditions of the cement are under the conditions of 23°C and 95% humidity for 7 days of curing with the test conditions being at 23°C and the waterproof rolling material and concrete being 180° peeled.

The heat-treated concrete means that the concrete is left at a temperature of 70°C for 7 days, and then combined with the waterproof rolling material.

The soaked concrete means that the waterproof rolling material is immersed in water for 7 days at 23°C and then combined with concrete.

The UV treated concrete means that the conditions that the waterproof rolling material are kept for 72 h at an ultraviolet wavelength of 300-400 nm, a radiant illumination of 58-62 W/m² per square meter, a black panel temperature of 62-68°C, illumination meanwhile spraying for 18 minutes every 2 hours, and then combined with concrete.

The concrete in water means that the cured concrete specimen is immersed in water at 21-25°C for 28 days, and then combined with the waterproof rolling material.

It should be finally noted that, the above embodiments are merely used for illustrating, rather than limiting, the technical solution of the present invention; Although the present invention has been described in detail with reference to the foregoing embodiments, it should be understood by those of ordinary skill in the art that the technical solutions specified in the foregoing embodiments could still be modified, or some or all of the technical features thereof may be equivalently replaced; and the modifications or replacements do not make the essence of corresponding technical solutions depart from the scope of the technical solution of the embodiments of the present invention.

## Claims

1. A pre-laid polymer waterproof rolling material, wherein the material comprises a sheet-like polymer carrier, a hot-melt pressure-sensitive adhesive layer on the sheet-like polymer carrier, and a plurality of anti-sticking particles on the hot-melt pressure-sensitive adhesive layer; the particle size of the anti-sticking particles is smaller than the thickness of the hot-melt pressure-sensitive adhesive layer; the surface of the anti-sticking particles is coated with an organic layer; and the anti-sticking particles are connected with the hot-melt pressure-sensitive adhesive layer by means of the organic layer;
the organic layer comprises the following components:
100-160 parts by weight of a solvent;
50-80 parts by weight of a polyurethane resin;
15-20 parts by weight of a pigment;
10-12 parts by weight of a filler;
0.3-1 part by weight of a cross-linking agent;
0.5-1 part by weight of an antioxidant;
1-2.5 parts by weight of an anti-ultraviolet agent; and
0.03-0.2 part by weight of a thickener.

2. The pre-laid polymer waterproof rolling material according to claim 1, wherein the sheet-like polymer carrier includes polyethylene, polypropylene, ethylene-olefin copolymer, ethylene-vinyl acetate copolymer, polyvinyl acetate, polyethyl acrylate, polytetrafluoroethylene, polyvinylidene fluoride, polyethylene terephthalate, polyvinyl chloride, polyamide, or a combination of two or more of these materials.

3. The pre-laid polymer waterproof rolling material according to claim 1, wherein the hot-melt pressure-sensitive adhesive layer includes a butyl rubber-based adhesive, a polyisobutylene-based adhesive, a butyl-based adhesive, an acrylic adhesive, a styrene-isoprene-styrene-based adhesive, a styrene-ethylene-butene-styrene-based adhesive, a styrene-butadiene-styrene-based adhesive, a styrene-butadiene-based adhesive, or a combination of two or more of these materials.

4. The pre-laid polymer waterproof rolling material according to claim 1, wherein the solvent is an aqueous solvent or an oily solvent.

5. The pre-laid polymer waterproof rolling material according to claim 4, wherein the aqueous solvent is water; the oily solvent is acetone, butanone or ethyl acetate.

6. The pre-laid polymer waterproof rolling material according to claim 1, wherein the filler is calcium carbonate, silicon dioxide, magnesium silicate, aluminum hydroxide or aluminum oxide; the pigment is titanium dioxide or zinc oxide; the anti-ultraviolet agent is a composite anti-ultraviolet agent; the cross-linking agent is an isocyanate; the thickener is bentonite; and the antioxidant is a phenolic antioxidant.

7. The pre-laid polymer waterproof rolling material according to claim 1, wherein the thickness of the sheet-like polymer carrier is 0.3-2 mm, the thickness of the hot-melt pressure-sensitive adhesive layer is 0.1-0.5 mm, and the particle size of the anti-sticking particles is 0.1-0.3 mm.

8. The pre-laid polymer waterproof rolling material according to claim 1, wherein the anti-sticking particles include quartz sand, cement powder, mica, clay, aluminum hydroxide, aluminum oxide, or a combination of two or more of these materials.

9. The pre-laid polymer waterproof rolling material according to claim 6, wherein the titanium dioxide is a rutile nano-titanium dioxide.

10. The pre-laid polymer waterproof rolling material according to claim 1, wherein one side of the surface of the hot-melt pressure-sensitive adhesive layer is exposed, and a peelable release film is adhered to the hot-melt pressure-sensitive adhesive layer that is exposed; an adhesive layer is provided on the other side of the bottom of the sheet-like polymer carrier, a peelable release film is adhered to the adhesive layer, and the adhesive layer is a hot-melt pressure-sensitive adhesive layer.
